(19)

Europäisches Patentamt
European Patent Office
Office européen des brevets

(11) **EP 4 545 594 A1**

(12) **EUROPEAN PATENT APPLICATION**

(43) Date of publication:
**30.04.2025 Bulletin 2025/18**

(21) Application number: **23383090.0**

(22) Date of filing: **24.10.2023**

(51) International Patent Classification (IPC):
***C08L 23/04*** (2006.01)   ***B32B 27/32*** (2006.01)
***C08J 5/18*** (2006.01)

(52) Cooperative Patent Classification (CPC):
(C-Sets available)
**C08L 23/04; B32B 27/32; C08J 5/18;** C08L 2203/16
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Dow Global Technologies LLC
Midland, MI 48674 (US)**

(72) Inventors:
• **QUIAO, Yusen
  Lake Jackson, 77566 (US)**
• **KARJALA, Teresa P.
  Lake Jackson, 77566 (US)**

• **SÁNCHEZ BLANCO, María Dolores
  43006 Salou (ES)**
• **FRANCOIS, Lara
  4542 NM Hoek (NL)**
• **BAREMAN, Jan
  4530AA Terneuzen (NL)**
• **MENDENHALL, Jonathan D.
  Lake Jackson, 77566 (US)**
• **DUMONT, Paul Hubert W.J.
  43006 Salou (ES)**
• **PARKINSON, Shaun
  43006 Salou (ES)**

(74) Representative: **Elzaburu S.L.P.
Edificio Torre de Cristal
Paseo de la Castellana 259 C, planta 28
28046 Madrid (ES)**

(54) **POLYETHYLENE COMPOSITIONS FOR IMPROVED COLLATION SHRINK FILMS**

(57) Disclosed here is a polymer blend comprising low density polyethylene (LDPE) and less than 10 wt.% high density polyethylene (HDPE), wherein the LDPE comprises a density of 0.910 to 0.925 g/cc, a melt index (I2) of 0.2 to 0.8 dg/min, and an $M_w(cc)/M_n(cc)$ from 4 to 10; wherein the HDPE comprises a density of 0.940 to 0.970 g/cc, an I2 from 0.6 to 10 dg/min, and an $M_w(cc)/M_n(cc)$ from 2 to 5; and wherein the polymer blend comprises a density of 0.918 to 0.926 g/cc, an I2 from 0.2 to 0.8 dg/min, and an $M_w(cc)/M_n(cc)$ from 4 to 9.

**EP 4 545 594 A1**

(52) Cooperative Patent Classification (CPC): (Cont.)

C-Sets
**C08L 23/04, C08L 23/06**

## Description

### FIELD

The present application is related to polymer compositions, and in particular related to compositions comprising low-density polyethylene (LDPE)-based polymers blended with high-density polyethylene (HDPE)-based polymers.

### BACKGROUND

The use of polyolefin compositions in packaging applications is generally known. Specifically, low-density polyethylene (LDPE) with elevated density (>0.925 g/cc) is attractive in flexible packaging applications, including collation shrink, shrink hood, heavy duty shipping sacks, and industrial heavy-duty films, as it imparts good mechanical properties (e.g., stiffness) to the films while maintaining good optical properties.

However, maintaining good optical properties for polyethylene blends with elevated density is challenging. Typically, increasing the density of polyethylene will increase crystallinity and thereby negatively impact the optical properties. While blending with HDPE yields higher density and improve mechanical properties such as stiffness, blending with HDPE often yields reduced optical properties.

Accordingly, there is a need for improved polyethylene compositions that exhibit good mechanical and optical properties.

### SUMMARY

Embodiments of the present disclosure meet this need by utilizing an LDPE base resin with slightly lower density ($\leq$ 0.925 g/cc) and a minimum amount of HDPE (<10 wt.%) to produce an LDPE/HDPE polymer composition having surprisingly good balance of film mechanical properties and optical properties. Without being limited by theory, maintaining the HDPE below 10 wt.% enables the blend to maintain the optical properties while providing stiffness and mechanical properties.

A first aspect includes a polymer blend comprising low density polyethylene (LDPE) and less than 10 wt.% high density polyethylene (HDPE), wherein the LDPE comprises a density of 0.910 to 0.925 g/cc, a melt index (I2) of 0.2 to 0.8 dg/min, and an $M_w(cc)/M_n(cc)$ from 4 to 10; the HDPE comprises a density of 0.940 to 0.970 g/cc, an I2 from 0.6 to 10 dg/min, and an $M_w(cc)/M_n(cc)$ from 2 to 5; and the polymer blend comprises a density of 0.918 to 0.926 g/cc, an I2 from 0.2 to 0.8 dg/min, and an $M_w(cc)/M_n(cc)$ from 4 to 9.

A second aspect includes the polymer blend of the first aspect, wherein the density of the LDPE is from 0.920 to 0.925 g/cc, the I2 of the LDPE is less than 0.5 dg/min, and the $M_w(cc)/M_n(cc)$ of the LDPE is from 6 to 9.

A third aspect includes the polymer blend of the first or the second aspect, wherein the LDPE has an $M_z(abs)/M_w(abs)$ from 5 to 20, and a gpcBR greater than 0.05 as measured according to triple-detector GPC (TD-GPC), in which "abs" refers to absolute molecular weights.

A fourth aspect includes the polymer blend of any one of the first to the third aspect, wherein the LDPE has a melt strength of 15 to 25 cN.

A fifth aspect includes the polymer blend of any one of the first to the fourth aspect, wherein the polymer blend comprises from 2 to 10 wt.% HDPE, or from 3.5 to 5 wt.% HDPE.

A sixth aspect includes the polymer blend of any one of the first to the fifth aspect, wherein the polymer blend has an $M_z(abs)/M_w(abs)$ from 14 to 21, and a gpcBR greater than 0.05.

A seventh aspect includes the polymer blend of any one of the first to the sixth aspect, wherein the I2 of the polymer blend is less than 0.5 dg/min.

An eight aspect includes the polymer blend of any one of the first to the seventh aspect, wherein the polymer blend has a melt strength of 15 to 25 cN.

A ninth aspect includes a film comprising the polymer blend of any one of the first to the eighth aspect, wherein the film is a monolayer film or a multilayer film.

A tenth aspect includes the film of the ninth aspect, wherein the film is a multilayer film comprising the polymer blend in a core layer.

An eleventh aspect includes a composition comprising ethylene-based polymer, wherein the ethylene-based polymer comprises a density of 0.918 to 0.926 g/cc, an I2 from 0.2 to 0.8 dg/min, and an $M_w(cc)/M_n(cc)$ from 4 to 9.

A twelfth aspect includes the composition of the eleventh aspect, wherein the ethylene-based polymer is LDPE.

Additional features and advantages will be set forth in the detailed description that follows, and in part will be readily apparent to those skilled in the art from that description or recognized by practicing the embodiments described herein, including the detailed description that follows, and the claims.

It is to be understood that both the foregoing general description and the following detailed description describe various embodiments and are intended to provide an overview or framework for understanding the nature and character of the claimed subject matter.

## BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:

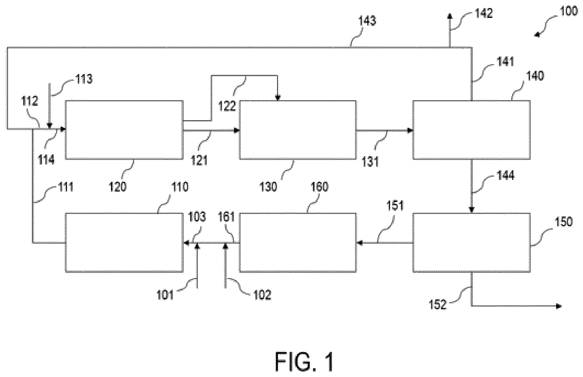

FIG. 1 schematically illustrates the system for processing ethylene polymers.

## DETAILED DESCRIPTION

As discussed above, polymer blend compositions disclosed and described herein comprise low density polyethylene (LDPE) and less than 10 wt.% high density polyethylene (HDPE), wherein the LDPE comprises a density of 0.910 to 0.925 g/cc, a melt index (I2) of 0.2 to 0.8 dg/min, and an $M_w(cc)/M_n(cc)$ from 4 to 10; the HDPE comprises a density of 0.940 to 0.970 g/cc, an I2 from 0.6 to 10 dg/min, and an $M_w(cc)/M_n(cc)$ from 2 to 5; and the polymer blend comprises a density of 0.918 to 0.926 g/cc, an I2 from 0.2 to 0.8 dg/min, and an $M_w(cc)/M_n(cc)$ from 4 to 9.

LDPE

In embodiments, the density of the LDPE or blend is from 0.910 to 0.925 g/cc, such as from 0.910 to 0.920 g/cc, from 0.910 to 0.915 g/cc, from 0.915 to 0.925 g/cc, from 0.918 to 0.925 g/cc, from 0.920 to 0.925 g/cc, or from 0.922 to 0.925 g/cc.

In embodiments, the melt index (I2) of the LDPE is from 0.2 to 0.8 dg/min, such as from 0.2 to 0.7 dg/min, from 0.2 to 0.5 dg/min, or from 0.2 to 0.3 dg/min.

In embodiments, the $M_w(cc)/M_n(cc)$ of the LDPE is from 4 to 10, such as from 6 to 10, or from 6 to 9, which are measured according to TD-GPC.

In embodiments, the LDPE has an $M_z(abs)/M_w(abs)$ from 5 to 20, such as from 7 to 18, from 9 to 18, from 9 to 15, from 9 to 13 as measured according to triple-detector GPC (TD-GPC).

In embodiments, the LDPE has a melt strength of from 15 to 25 cN, such as from 16 to 24 cN, from 17 to 23 cN, from 18 to 22 cN, or from 19 to 21 cN.

In embodiments, the LDPE has a gpcBR greater than 0.05. In embodiments, the LDPE has a gpcBR from 0.5 to 2.0, such as from 0.75 to 2.0, from 0.8 to 2.0, from 1.0 to 1.9, from 1.2 to 1.8, or from 1.4 to 1.8.

In yet another embodiment, the density of the LDPE is from 0.920 to 0.925 g/cc, the I2 of the LDPE is less than 0.5 dg/min, and the $M_w(cc)/M_n(cc)$ of the LDPE is from from 6 to 9. In embodiments, the LDPE has an $M_z(abs)/M_w(abs)$ or from 5 to 20, and a gpcBR greater than 0.05.

HDPE

In embodiments, the density of the HDPE is from 0.940 to 0.970 g/cc, such as from 0.940 to 0.960 g/cc, from 0.940 to 0.955 g/cc, from 0.940 to 0.950 g/cc, from 0.940 to 0.945 g/cc, from 0.945 to 0.965 g/cc, from 0.945 to 0.960 g/cc, from 0.945 to 0.955 g/cc, from 0.945 to 0.950 g/cc, from 0.950 to 0.965 g/cc, from 0.950 to 0.960 g/cc, from 0.950 to 0.955 g/cc, from 0.955 to 0.965 g/cc, from 0.955 to 0.960 g/cc, or from 0.960 to 0.965 g/cc. Without being bound by theory, maintaining a density in the range from 0.940 to 0.965 g/cc is beneficial in order to improve or maintain the density and stiffness of the final blend with minimal impact on optical properties.

In embodiments, the melt index (I2) of the HDPE is from 0.6 to 10 dg/min, such as from 0.6 to 8 dg/min, from 0.6 to 6 dg/min, from 0.6 to 2.5 dg/min, from 0.6 to 1 dg/min, from 1 to 10 dg/min, from 1 to 8 dg/min, from 1 to 6 dg/min, from 1 to 2.5 dg/min, from 2.5 to 10 dg/min, from 2.5 to 8 dg/min, from 2.5 to 6 dg/min, from 6 to 10 dg/min, from 6 to 8 dg/min, or from 8 to 10 dg/min.

In embodiments, the $M_w(cc)/M_n(cc)$ of the HDPE is from 2 to 5, such as from 2.5 to 4.5, or from 2.5 to 4.0.

In yet another embodiments, the density of the HDPE is from 0.940 to 0.970 g/cc, the I2 of the HDPE is from 0.6 to 10 dg/min, and the $M_w(cc)/M_n(cc)$ of the HDPE is from 2 to 5.

In embodiments, the HDPE may be made by a gas-phase, solution-phase, or slurry polymerization processes, or any combination thereof. The catalysts used to make the polyethylene described herein may include Ziegler-Natta, metallocene, constrained geometry, single site catalysts, or chromium-based catalysts. In further embodiments, the HDPE is produced in a solution phase.

LDPE/HDPE Polymer Blend

In embodiments, the polymer blend comprises from 2 to 10 wt.% HDPE or from 3.5 to 5 wt.% HDPE. In further embodiments the polymer blend comprises from 90 wt.% to 98 wt.% LDPE, based on the weight of composition, or from 90 wt.% to 96.5 wt.%, from 90 wt.% to 95 wt.%, from 95 wt.% to 98 wt.%, from 95 wt.% to 96.5 wt.%, or from 96.5 wt.%.

In embodiments, the density of the polymer blend is from 0.918 to 0.926 g/cc. In further embodiments, the density of the polymer blend is from 0.918 to 0.926 g/cc, such as from 0.920 to 0.926 g/cc, from 0.922 to 0.926 g/cc, or from 0.924 to 0.926 g/cc. Without being bound by theory, maintaining a density at or below 0.926 g/cc is beneficial because higher density blends would have an undesirable optical property tradeoff.

In embodiments, the $M_w(cc)/M_n(cc)$ of the polymer blend is from 4 to 9, such as from 4 to 8, from 4 to 6, from 5.5 to 7.5, or from 6 to 8, which are measured according to TD-GPC.

In embodiments, the polymer blend has a $M_z(abs)/M_w(abs)$ from 6 to 22, such as from 9 to 21, from 12 to 21, or from 14 to 21.

In embodiments, the polymer blend has a gpcBR greater than 0.05, such as 0.5 to 2.4, such as from 0.75 to 2.4, from 0.8 to 2.4, from 1.0 to 2.4, from 1.2 to 2.4, or from 1.4 to 2.4, from 1.7 to 2.4, from 1.7 to 2.2, or from 1.7 to 2.0.

In yet another embodiment, the density of the polymer blend is from 0.918 to 0.926 g/cc, the I2 of the polymer blend is from 0.2 to 0.8 dg/min, and the $M_w(cc)/M_n(cc)$ of the polymer blend is from 4 to 9. In embodiments, the $M_z(abs)/M_w(abs)$ of the polymer blend is from 14 to 21, and the gpcBR of the polymer blend is greater than 0.05.

In embodiments, the melt index (I2) of the polymer blend is from 0.2 to 0.8 dg/min. In further embodiments, the I2 of the polymer blend is less than 0.5 dg/min, such as from 0.2 to 0.5 dg/min, or from 0.3 to 0.5 dg/min.

In embodiments, the polymer blend has a melt strength of 15 to 25 cN. In further embodiments, the polymer blend may have a melt strength of from 15 to 20 cN, from 15 to 18 cN, from 15 to 17 cN, from 15 to 16 cN, from 16 to 20 cN, from 16 to 19 cN, from 16 to 18 cN, from 16 to 17 cN, from 17 to 20 cN, from 17 to 19 cN, from 17 to 18 cN, from 18 to 20 cN, from 18 to 19 cN, or from 19 to 20 cN.

In yet another embodiment, the polymer blend composition comprises ethylene-based polymer, wherein the density of the ethylene based polymer is from 0.918 to 0.926 g/cc, the I2 of the ethylene based polymer is from 0.2 to 0.8 dg/min, the $M_w(cc)/M_n(cc)$ of the ethylene based polymer is from 4 to 9. In further embodiments, the ethylene based polymer is LDPE.

LDPE/HDPE Polymer Blend Films

The composition of polymer blends may be employed in a variety of conventional thermoplastic fabrication processes to produce useful articles, including extrusion coatings; collation shrink, shrink hood, heavy duty shipping sacks, and industrial heavy-duty films; and molded articles, such as blow molded, injection molded, or rotomolded articles; foams; wire and cable, fibers, and woven or non-woven fabrics.

The present disclosure also provides an article comprising at least one component formed from the disclosed compositions. In embodiments, the article is selected from a coating, a film, a foam, a laminate, a fiber, a tape, or a combination thereof.

In embodiments, the article is a film comprising the polymer blend, and the film comprising the polymer blend is a monolayer film or a multilayer film. In further embodiments, the film is a multilayer film comprising the polymer blend in a core layer.

In embodiments, the multilayer film comprising the polymer blend has an internal haze less than 3.5 %, a total haze less than 6.0%, and a clarity greater than 65% when measured on the film having a thickness of 50 μm.

**DEFINITIONS**

Unless stated to the contrary, implicit from the context, or customary in the art, all parts and percents are based on weight and all test methods are current as of the filing date of this disclosure.

The term "composition," as used herein, refers to a mixture of materials that comprise the composition, as well as reaction products and decomposition products formed from the materials of the composition.

The terms "blend" or "polymer blend," as used, mean an intimate physical mixture (that is, without reaction) of two or more polymers. A blend may or may not be miscible (not phase separated at molecular level). A blend may or may not be phase separated. A blend may or may not contain one or more domain configurations, as determined from transmission electron spectroscopy, light scattering, x-ray scattering, and other methods known in the art. The blend may be effected by physically mixing the two or more polymers on the macro level (for example, melt blending resins or compounding) or the micro level (for example, simultaneous forming within the same reactor).

The term "polymer" refers to a compound prepared by polymerizing monomers, whether of the same or a different type. The generic term polymer thus embraces the term homopolymer (which refers to polymers prepared from only one type of monomer with the understanding that trace amounts of impurities can be incorporated into the polymer structure), and the term "interpolymer" as defined infra. Trace amounts of impurities may be incorporated into and/or within a polymer.

The term "interpolymer" refers to polymers prepared by the polymerization of at least two different types of monomers. The generic term interpolymer includes copolymers (which refers to polymers prepared from two different monomers), and polymers prepared from more than two different types of monomers.

The term "ethylene-based polymer" or "ethylene polymer" refers to a polymer that comprises a majority amount of polymerized ethylene based on the weight of the polymer and, optionally, may comprise at least one comonomer.

The term "Polyethylene," "ethylene-based copolymer," or "ethylene copolymer" refers to polymers comprising greater than 50 wt.% of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); Medium Density Polyethylene (MDPE); and High Density Polyethylene (HDPE).

The phrase "high pressure, free-radical polymerization process," as used herein, refers to a free radical initiated polymerization carried out at an elevated pressure of at least 1000 bar (100 MPa).

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of' excludes from the scope of any succeeding recitation any other component, step or procedure, excepting those that are not essential to operability. The term "consisting of" excludes any component, step or procedure not specifically delineated or listed.

TEST METHODS

Triple Detector Gel Permeation Chromatography (TD-GPC).

The chromatographic system consisted of a PolymerChar GPC-IR (Valencia, Spain) high temperature GPC chromatograph equipped with an internal IR5 infra-red detector (IR5) and 4-capillary viscometer (DV) coupled to a Precision Detectors (Now Agilent Technologies) 2-angle laser light scattering (LS) detector Model 2040. For all absolute Light scattering measurements, the 15-degree angle is used for measurement. The autosampler oven compartment was set at 160 °C and the column compartment was set at 150 °C. The columns used were 4 Agilent "Mixed A" 30cm 20-micron linear mixed-bed columns. The chromatographic solvent used was 1,2,4-trichlorobenzene (TCB) and contained 200 ppm of butylated hydroxytoluene (BHT). The solvent source was nitrogen sparged. The injection volume used was 200 microliters and the flow rate was 1.0 milliliters/minute.

Calibration of the GPC column set was performed with 21 narrow molecular weight distribution polystyrene standards with molecular weights ranging from 580 to 8,400,000 and were arranged in 6 "cocktail" mixtures with at least a decade of separation between individual molecular weights. The standards were purchased from Agilent Technologies. The polystyrene standards were prepared at 0.025 grams in 50 milliliters of solvent for molecular weights equal to or greater than 1,000,000, and 0.05 grams in 50 milliliters of solvent for molecular weights less than 1,000,000. The polystyrene standards were dissolved at 80 °C with gentle agitation for 30 minutes then cooled and the room temperature solution is transferred cooled into the autosampler dissolution oven at 160 °C for 30 minutes. The polystyrene standard peak molecular weights were converted to polyethylene molecular weights using Equation (1) (as described in Williams and Ward, J. Polym. Sci., Polym. Let., 6, 621 (1968)):

$$M_{polyethylene} = A \times \left( M_{polystyrene} \right)^{B} \qquad\qquad (EQ\ 1)$$

where M is the molecular weight, A has a value of 0.3988 and B is equal to 1.0.

A fifth order polynomial was used to fit the respective polyethylene-equivalent calibration points.

The total plate count of the GPC column set was performed with decane which was introduced into blank sample via a micropump controlled with the PolymerChar GPC-IR system. The plate count for the chromatographic system should be greater than 18,000 for the 4 Agilent "Mixed A" 30cm 20-micron linear mixed-bed columns.

Samples were prepared in a semi-automatic manner with the PolymerChar "Instrument Control" Software, wherein the samples were weight-targeted at 2 mg/ml, and the solvent (contained 200ppm BHT) was added to a pre nitrogen-sparged septa-capped vial, via the PolymerChar high temperature autosampler. The samples were dissolved for 3 hours at 160 °C under "low speed" shaking.

The calculations of $M_n(cc)$, $M_w(cc)$, and $M_z(cc)$ were based on GPC results using the internal IR5 detector (measurement channel) of the PolymerChar GPC-IR chromatograph according to Equations (2)-(4), using PolymerChar GPCOne™ software, the baseline-subtracted IR chromatogram at each equally-spaced data collection point (i), and the polyethylene equivalent molecular weight obtained from the narrow standard calibration curve for the point (i) from Equation (1).

$$M_n(cc) = \frac{\sum^i IR_i}{\sum^i \left( IR_i \big/ M_{polyethylene_i} \right)} \qquad \text{(EQ 2)}$$

$$M_w(cc) = \frac{\sum^i \left( IR_i * M_{polyethylene_i} \right)}{\sum^i IR_i} \qquad \text{(EQ 3)}$$

$$M_z(cc) = \frac{\sum^i \left( IR_i * M_{polyethylene_i}^2 \right)}{\sum^i \left( IR_i * M_{polyethylene_i} \right)} \qquad \text{(EQ 4)}$$

In order to monitor the deviations over time, a flowrate marker (decane) was introduced into each sample via a micropump controlled with the PolymerChar GPC-IR system. This flowrate marker (FM) was used to linearly correct the pump flowrate (Flowrate(nominal)) for each sample by RV alignment of the respective decane peak within the sample (RV(FM Sample)) to that of the decane peak within the narrow standards calibration (RV(FM Calibrated)). Any changes in the time of the decane marker peak are then assumed to be related to a linear-shift in flowrate (Flowrate(effective)) for the entire run. After calibrating the system based on a flow marker peak, the effective flowrate (with respect to the narrow standards calibration) is calculated as Equation (5). Processing of the flow marker peak was done via the PolymerChar GPCOne™ Software. Acceptable flowrate correction is such that the effective flowrate should be within ±0.5% of the nominal flowrate.

$$Flowrate(effective) = Flowrate(nominal) \frac{RV(FM\ Calibrated)}{RV(FM\ Sample)}$$

$$\text{(EQ 5)}$$

For the determination of the viscometer and light scattering detector offsets from the IR5 detector, the systematic Approach for the determination of multi-detector offsets is done in a manner consistent with that published by Balke, Mourey, et al. (Mourey and Balke, Chromatography Polym. Chpt 12, (1992)) (Balke, Thitiratsakul, Lew, Cheung, Mourey, Chromatography Polym. Chpt 13, (1992)), optimizing triple detector log (MW and IV) results from a linear homopolymer polyethylene standard ($3.5 > M_w/M_n > 2.2$) with a molecular weight in the range of 115,000 to 125,000 g/mol to the narrow standard column calibration results from the narrow standards calibration curve using PolymerChar GPCOne™ Software.

The absolute molecular weight data was obtained in a manner consistent with that published by Zimm (Zimm, B.H., J. Chem. Phys., 16, 1099 (1948)) and Kratochvil (Kratochvil, P., Classical Light Scattering from Polymer Solutions, Elsevier, Oxford, NY (1987)) using PolymerChar GPCOne™ software. The overall injected concentration, used in the determination of the molecular weight, was obtained from the mass detector area and the mass detector constant, derived from a suitable linear polyethylene homopolymer, or one of the polyethylene standards of known weight-average molecular weight. The calculated molecular weights (using GPCOne™) were obtained using a light scattering constant, derived from one or more of the polyethylene standards mentioned below, and a refractive index concentration coefficient, dn/dc, of -0.104. Generally, the mass detector response (IR5) and the light scattering constant (determined using GPCOne™) should be determined from a linear standard with a molecular weight in excess of about 50,000 g/mole. The viscometer calibration (determined using GPCOne™) can be accomplished using the methods described by the manufacturer, or, alternatively, by using the published values of suitable linear standards, such as Standard Reference Materials (SRM) 1475a (available from National Institute of Standards and Technology (NIST)). A viscometer constant (obtained using GPCOne™) is calculated which relates specific viscosity area (DV) and injected mass for the calibration standard to its intrinsic viscosity. The chromatographic concentrations are assumed low enough to eliminate addressing $2^{nd}$ viral coefficient effects (concentration effects on molecular weight).

The absolute weight average molecular weight ($MW_{(Abs)}$) was obtained (using GPCOne™) from the Area of the Light Scattering (LS) integrated chromatogram (factored by the light scattering constant) divided by the mass recovered from the mass constant and the mass detector (IR5) area. The molecular weight and intrinsic viscosity responses are linearly extrapolated at chromatographic ends where signal to noise becomes low (using GPCOne™). Other respective moments, $M_n(abs)$, $M_w(abs)$, and $M_z(abs)$ are be calculated according to Equations (6)-(8) as follows:

$$M_n(abs) = \frac{\sum^i IR_i}{\sum^i \left( IR_i / M_{Absolute_i} \right)} \qquad (EQ\ 6)$$

$$M_w(abs) = \frac{\sum^i IR_i \times M_{Absolute_i}}{\sum^i IR_i} \qquad (EQ\ 7)$$

$$M_z(abs) = \frac{\sum^i \left( IR_i * M_{Absolute_i}^2 \right)}{\sum^i \left( IR_i * M_{Absolute_i} \right)} \qquad (EQ\ 8)$$

gpcBR Branching Index by Triple Detector GPC (TD-GPC).

The gpcBR branching index was determined by first calibrating the light scattering, viscosity, and infrared IR5 detectors as described previously. Baselines were then subtracted from the light scattering, viscometer, and IR5 (measurement channel) chromatograms. Integration windows were then set to ensure integration of all of the low molecular weight retention volume range in the light scattering and viscometer chromatograms that indicate the presence of detectable polymer from the infrared (IR5) chromatogram. Linear polyethylene standards were then used to establish polyethylene and polystyrene Mark-Houwink constants. Upon obtaining the constants, the two values were used to construct two linear reference conventional calibrations for polyethylene molecular weight and polyethylene intrinsic viscosity as a function of elution volume, as shown in Equations (9) and (10):

$$M_{PE} = \left(\frac{K_{PS}}{K_{PE}}\right)^{\frac{1}{\alpha_{PE}+1}} \times M_{PS}^{\frac{\alpha_{PS}+1}{\alpha_{PE}+1}} \qquad (EQ\ 9)$$

$$[\eta]_{PE} = \frac{K_{PS} \times M_{PS}^{\alpha_{PS}+1}}{M_{PE}} \qquad (EQ\ 10)$$

The gpcBR branching index is a robust method for the characterization of long chain branching as described in Yau, Wallace W., "Examples of Using 3D-GPC—TREF for Polyolefin Characterization," Macromol. Symp., 2007, 257, 29-45. The index avoids the "slice-by-slice" 3D-GPC calculations traditionally used in the determination of g' values and branching frequency calculations, in favor of whole polymer detector areas. From TD-GPC data, one can obtain the sample bulk absolute weight average molecular weight ($M_w(abs)$) by the light scattering (LS) detector, using the peak area method. The method avoids the "slice-by-slice" ratio of light scattering detector signal over the concentration detector signal, as required in a traditional g' determination.

With TD-GPC, sample intrinsic viscosities were also obtained independently using Equation (11). The area calculation in Equation (11) offers more precision, because, as an overall sample area, it is much less sensitive to variation caused by detector noise and TD-GPC settings on baseline and integration limits. More importantly, the peak area calculation was not affected by the detector volume offsets. Similarly, the high-precision sample intrinsic viscosity ([/z]) was obtained by the area method shown in Equation (11):

$$[\eta] = \frac{\sum_i c_i \times [\eta]_i}{\sum_i c_i} = \frac{\sum_i \eta_{sp_i}}{\sum_i c_i} = \frac{Viscometer\ Area}{Conc.\ Area} \qquad (EQ\ 11)$$

where $h_{spi}$ stands for the specific viscosity as acquired from the viscometer detector.

To determine the gpcBR branching index, the light scattering elution area for the sample polymer was used to determine the molecular weight of the sample ($M_w(abs)$). The viscosity detector elution area for the sample polymer was used to determine the intrinsic viscosity ([h]) of the sample.

Initially, the molecular weight and intrinsic viscosity for a linear polyethylene standard sample, such as SRM1475a or an equivalent, were determined using the conventional calibrations ("cc") for both molecular weight and intrinsic viscosity as a function of elution volume, per Equations (3) and (12):

$$[\eta]_{cc} = \frac{\sum_i c_i \times [\eta]_{i,cc}}{\sum_i c_i} = \frac{\sum_i c_i \times K_{PE} \times (M_{i,cc})^{\alpha_{PE}}}{\sum_i c_i} \qquad \text{(EQ 12)}$$

Equation (13) was used to determine the gpcBR branching index:

$$gpcBR = [(\frac{[\eta]_{cc}}{[\eta]}) \times (\frac{MW_{(Abs)}}{M_w{(cc)}})^{\alpha_{PE}} - 1] \qquad \text{(EQ 13)}$$

wherein $[\eta]$ is the measured intrinsic viscosity, $[\eta]]_{cc}$ is the intrinsic viscosity from the conventional calibration, $M_w(abs)$ is the measured weight average molecular weight, and $M_w(cc)$ is the weight average molecular weight of the conventional calibration. The weight average molecular weight by light scattering (LS) is commonly referred to as "absolute weight average molecular weight". The $M_w(cc)$ from Equation (3) using conventional GPC molecular weight calibration curve ("conventional calibration") is often referred to as "polymer chain backbone molecular weight" and "conventional weight average molecular weight".

All statistical values with the "cc" subscript are determined using their respective elution volumes, the corresponding conventional calibration as previously described, and the concentration ($c_i$). The values of "$M_w(abs)$" and "[h]" are measured values based on the mass detector, LALLS, and viscometer areas. The value of $K_{PE}$ is adjusted iteratively, until the linear reference sample has a gpcBR measured value of zero. For example, the final values for $\alpha$ and Log K for the determination of gpcBR in this particular case are 0.725 and -3.391, respectively, for polyethylene, and 0.722 and -3.993, respectively, for polystyrene. These polyethylene coefficients were then entered into Equation (13).

Once the K and $\alpha$ values have been determined using the procedure discussed previously, the procedure is repeated using the branched samples. The branched samples are analyzed using the final Mark-Houwink constants obtained from the linear reference as the best "cc" calibration values are applied.

Melt Strength

Melt strength measurements were conducted on a Göttfert Rheotens 71.97 (Göttfert Inc.; Rock Hill, SC), attached to a Göttfert Rheotester 2000 capillary rheometer. The melted sample (about 25 to 30 grams) was fed with a Göettfert Rheotester 2000 capillary rheometer, equipped with a flat entrance angle (180 degrees) of length of 30 mm, diameter of 2.0 mm, and an aspect ratio (length/diameter) of 15. After equilibrating the samples at 190 °C for 10 minutes, the piston was run at a constant piston speed of 0.265 mm/second. The standard test temperature was 190 °C. The sample was drawn uniaxial to a set of accelerating nips, located 100 mm below the die, with an acceleration of 2.4 mm/s$^2$. The tensile force was recorded as a function of the take-up speed of the nip rolls. Melt strength was reported as the average plateau force (cN) before the strand broke. The following conditions were used in the melt strength measurements: plunger speed = 0.265 mm/second; wheel acceleration = 2.4 mm/s$^2$; capillary diameter = 2.0 mm; capillary length = 30 mm; and barrel diameter = 12 mm.

Density

Samples for density measurements were prepared according to ASTM D 4703-10. Samples were pressed at 374 °F (190 °C), for five minutes, at 10,000 psi (68 MPa). The temperature was maintained at 374 °F (190 °C) for the above five minutes, and then the pressure was increased to 30,000 psi (207 MPa) for three minutes. This was followed by a one minute hold at 70 °F (21 °C) and 30,000 psi (207 MPa). Measurements were made within one hour of sample pressing using ASTM D792-08, Method B.

Melt Index

Melt index (MI or I2), was measured in accordance with ASTM D 1238-10, Condition 190 °C/2.16 kg, Method B, and was reported in grams eluted per 10 minutes.

Dynamic Mechanical Spectroscopy (DMS)

Resins were compression-molded into "3 mm thick $\times$ 1 inch" circular plaques at 177 °C, for five minutes, under 25,000 psi pressure, in air. The sample was then taken out of the press, and placed on a counter to cool.

A constant temperature frequency sweep was performed using a TA Instruments "Advanced Rheometric Expansion System (ARES)," equipped with 25 mm (diameter) parallel plates, under a nitrogen purge. The sample was placed on the plate, and allowed to melt for five minutes at 190 °C. The plates were then closed to a gap of "2 mm," the sample trimmed (extra sample that extends beyond the circumference of the "25 mm diameter" plate was removed), and then the test was started. The method had an additional five-minute delay built in, to allow for temperature equilibrium. The experiments were performed at 190 °C over a frequency range of 0.1 to 100 rad/s. The strain amplitude was constant at 10%. The complex tan delta, viscosity at 0.1 rad/s (V0.1), the viscosity at 100 rad/s (V100), and the viscosity ratio (V0.1/V100) were calculated from these data.

Differential Scanning Calorimetry (DSC).

In preparation for Differential Scanning Calorimetry (DSC) testing, pellet samples are first loaded into a 1 in. diameter chase of 0.13mm thickness and compression molded into a film under 25,000 lbs of pressure at 190 °C for approximately 10 seconds. The resulting film is then cooled to room temperature. The film is then subjected to a punch press in order to extract a disk that will fit the aluminum DSC test pan. The disk is then weighed individually (note: sample weight is approximately 5-6mg), placed into the aluminum pan, and sealed before being inserted into the DSC test chamber.

In reference to ASTM standard D3418, the DSC test was conducted using a heat-cool-heat cycle. First, the sample was heated to 150 °C with a rate of 10 °C/min and held isothermally for 5 min to remove thermal and process history. The sample was then quenched to -40 °C at a rate of 10 °C/min and held isothermally once again for 5 min. Lastly, the sample was heated at a rate of 10 °C/min to 150 °C for the second heating cycle. For data analysis, the melting temperatures and enthalpy of fusion was extracted from the second heating curve, whereas the enthalpy of crystallization was determined from the cooling curve. The enthalpy of fusion ($H_f$) and crystallization were obtained by integrating the DSC thermogram from -20 °C to the end of melting and crystallization, respectively. The heat of fusion of 100% crystalline polyethylene is taken to be 292 J/g to calculate the wt.% crystallinity using Equation (14) below. The DSC tests are performed using the TA Instruments Discovery DSC and data analyses are conducted via TA Instruments Universal Analysis and TRIOS software packages.

$$\% \text{ Crystallinity} = ((H_f)/292 \text{ J/g}) \times 100 \qquad\qquad (EQ\ 14)$$

n-Hexane Extractables.

The term "n-hexane extractables" as used herein, refers to the amount of n-hexane soluble material extracted from the resultant polymer composition by n-hexane. The extraction process follows both the Food and Drug Administration (FDA) procedure for determining the solvent extractable portion of the polyolefin (21 CFR 177.1520 (d)(3)(ii)) and ASTM D5227. Polymer pellets are pressed or extruded into film with a thickness of 3 to 4 mils, then cut into 1 × 1 inch square pieces. Film pieces are weighed (2.5 ± 0.05 g) then placed in a basket then extracted for two hours in an n-hexane vessel at 49.5 ± 0.5 °C in a heated water bath as described in ASTM D5227. After two hours, the films are removed, rinsed with clean n-hexane, and dried in a vacuum oven (80 ± 5 °C) at full vacuum for two hours. The films are then placed in a desiccator and allowed to cool to room temperature for a minimum of one hour. The films are then reweighed, and the amount of mass loss due to extraction in n-hexane is calculated. N-hexane extractables are reported in wt.%.

$^1$H NMR. Nuclear Magnetic Resonance ($^1$H NMR for unsaturations).

NMR spectroscopic methods for determining polyethylene unsaturation, for example see Busico, V., et al., Macromolecules, 2005, 38, 6988.

*$^1$H NMR Sample Preparation.* Samples were prepared by adding ~0.1 g of sample to 3.25 g of 50/50 by weight 1,1,2,2-tetrachlorethane-d2/perchloroethylene (TCE/PCE) containing 0.001 M $Cr(AcAc)_3$ and about 75 ppm butylated hydroxytoluene (BHT), in a Norell 1001-7 10mm NMR tube. The samples were capped, sealed with Teflon tape, and then heated and vortexed at about 110 °C to 115 °C to dissolve and ensure homogeneity.

*$^1$H NMR Data Acquisition Parameters.* $^1$H NMR was performed on a Bruker AVANCE 600 MHz spectrometer equipped with a Bruker high-temperature CryoProbe at a sample temperature of 120 °C. Spectra were acquired with ZG pulse, 1.8s AQ, 64 or 128 scans with a relaxation delay of 14s.

*$^1$H NMR Data Analysis.* $^1$H NMR Calculations for unsaturated groups per one thousand carbon atoms (1000C). The spectra were referenced to the residual proton signal of TCE at 6.0 ppm. The total polymer integral from about -0.5 to 2.5 ppm was set to an arbitrary value, for example, 2000. The corresponding integrals for unsaturations *(cis-* and *trans-*vinylenes from about 5.40 to 5.60 ppm, trisubstituted from about 5.16 to 5.35 ppm, vinyl from about 5.0 to 5.15 ppm, and vinylidene from about 4.75 to 4.85 ppm) were obtained. The -OH signal of BHT at about 4.9 ppm was not included in the integral areas. The integral of the whole polymer is divided by 2 to obtain the total polymer carbons, i.e., 1000 in this example. The unsaturated group integrals divided by the corresponding number of protons contributing to that integral represent the moles of each type of unsaturation per 1000 moles of total polymer carbons. This is referred to as unsaturated groups per 1000 carbons ("100/C").

<u>$^{13}$C Nuclear Magnetic Resonance ($^{13}$C NMR for Branching).</u>

Samples for $^{13}$C NMR were prepared by adding approximately 3g of 1,1,2,2-tetrachloroethane (TCE) containing 25 wt.% TCE-d2 and 0.025 M Cr(AcAc)$_3$, to about 0.25 g polymer sample, in a 10 mm NMR tube. The samples were then dissolved and homogenized by heating the tube and its contents to 120 °C to 140 °C using a heating block and vortex mixer. Each dissolved sample was visually inspected to ensure homogeneity. Samples were thoroughly mixed immediately prior to analysis and were not allowed to cool before insertion into the heated NMR sample holders.

All data were collected using a Bruker 600 MHz spectrometer equipped with a 10 mm high temperature cryoprobe. The $^{13}$C data was acquired using a 7.8 second pulse repetition delay, 90-degree flip angles, and inverse gated decoupling, with a sample temperature of 120 °C. All measurements were made on non-spinning samples in locked mode. Samples were allowed to thermally equilibrate prior to data acquisition. The $^{13}$C NMR chemical shifts were internally referenced to the EEE triad at 30.0 ppm. Table A lists the peak assignments used for branching measurement in LDPE. The "C$^{6+}$" value is a direct measure of C$^{6+}$ branches in LDPE, where the long branches are not distinguished from "chain ends." The "32.2 ppm" peak, representing the third carbon from the end of all chains or branches of six or more carbons, is used to determine the "C$^{6+}$" value.

Table A: Branching Type and $^{13}$C NMR integral ranges used for quantitation

| Branch Type | Peak(s) integrated | Identity of the integrated carbon peak(s) |
|---|---|---|
| 1,3 diethyl | about 10.5 to 11.5 ppm | 1,3 diethyl branch methyls |
| C2 on quaternary carbon | about 7.5 to 8.5 ppm | 2 ethyl branches on a quaternary carbon, methyls |
| C4 | about 23.3 to 23.5 ppm | Second CH$_2$ in a 4-carbon branch, counting the methyl as the first C |
| C5 | about 32.60 to 32.80 ppm | Third CH$_2$ in a 5-carbon branch, counting the methyl as the first C |
| C6+ | about 32.1 to 32.3 ppm | The third CH$_2$ (counting the methyl as the first C) in any branch of 6 or more carbons in length |
| C4+ | about 38.2 ppm | The CH carbon for branches or segments of 4 or more carbons in length, when said branch is at least about 4 to 5 carbons distant from any other branch |

<u>Total (Overall) and Internal Haze</u>

Samples measured for internal haze and overall haze were sampled and prepared according to ASTM D 1003. Internal haze was obtained via refractive index matching using mineral oil on both sides of the films. A Hazegard Plus (BYK-Gardner USA; Columbia, MD) was used for testing.

<u>Zebedee Clarity</u>

Zebedee film clarity was measured according to ASTM D1746-15. A Zebedee CL-100 Clarity Meter was used (Model: CI-100 SN:212615). The average of 5 specimens was reported.

<u>Secant Modulus</u>

The tensile properties of the film were measured according to ASTM D-882. ASTM D-882 were used to determine a tensile strength, 1% Secant Modulus, and 2% Secant Modulus in the MD (machine direction) and CD (cross direction.) ASTM D-1922 were used to determine Elmendorf Tear Strength in the MD and CD.

Shrink Force, Shrinkage, and Contraction Force

Shrink force and shrinkage were measured using "Retratech" equipment. In this method, films strips of 15 mm width and 100 mm length were used as test specimens, cut either along the machine direction (MD) or the cross-direction (CD). Two specimens were free to have motion, and six specimens were constrained from any motion in the direction of test (MD or CD). The two specimens that were free to move were used to measure free-shrinkage and the constrained six specimens were used to measure shrink force. The test strips were subjected to a sudden increase in temperature as an oven pre-heated to a chosen temperature (setpoint) was mechanically engaged to cover the specimens initially at ambient temperature. The specimens shrunk physically and the amount of shrinkage of the specimens was measured using a displacement sensor which was connected to one end of the specimens.

The specimens used for determining the shrink force of the specimens were connected to load cells which provided a force-signal. These measurements were available as a function of time as the temperature about the specimens change during the test. The temperature profile experienced by the film specimens was a result of the test conditions chosen which, in turn, affected test data.

There were usually two methods of choosing test conditions (oven-temperature setpoint, dwell time and total time): (1) the method describe in ISO 14616; and (2) a fixed condition method. In the above method (1), test conditions were chosen to comply with ISO 14616 requirements for the MD specimens. In the above method (2), a fixed set of temperature setpoints and dwell times were set for all samples, with the values of the samples chosen to achieve a well-defined peak of force in the MD during temperature-rise phase which would eventually relax down to zero before the oven was disengaged. When the oven was disengaged prior to the force specimens relaxing to zero-force (during ISO 14616 method), there occurred a rise in force with the film specimens cooling down. The maximum shrinkage at the end of the total analysis time was termed "Free Shrinkage".

EXAMPLES

The various embodiments of compositions for LDPE/HDPE blends comprising less than 10% HDPE and films comprising the LDPE/HDPE blends will be further clarified by the following examples. The examples are illustrative in nature, and should not be understood to limit the subject matter of the present disclosure.

Ethylene Polymer Process Condition

Table 1 lists ethylene polymers applied to form the inventive examples and comparative examples. Figure 1 schematically illustrates the process of forming LDPE and HDPE.

Table 1: Materials/Ingredients

| Resin Name | Density (g/cc) | I2 (dg/min) | $M_n$(cc) $(\frac{g}{mol})$ | $M_w$(cc) $(\frac{g}{mol})$ | $M_z$(cc) $(\frac{g}{mol})$ | $\frac{M_w(cc)}{M_n(cc)}$ | $M_z$(abs) $(\frac{g}{mol})$ | $\frac{M_z(abs)}{M_w(abs)}$ |
|---|---|---|---|---|---|---|---|---|
| HDPE1 | 0.950 | 1.5 | 28,800 | 108,300 | 348,500 | 3.76 | N.D | N.D |
| HDPE2 | 0.955 | 4.0 | 23,600 | 81,100 | 242,800 | 3.44 | N.D | N.D |
| HDPE3 | 0.964 | 8.0 | 22,800 | 66,700 | 174,000 | 2.92 | N.D | N.D |
| LDPE1 | 0.926 | 0.30 | 18,800 | 107,400 | 422,000 | 5.71 | 5,386,700 | 23.9 |
| LDPE2 | 0.928 | 0.38 | 19,100 | 100,100 | 408,600 | 5.25 | 3,748,100 | 19.2 |
| LDPE3 | 0.928 | 0.55 | 17,800 | 107,300 | 388,800 | 6.01 | 780,900 | 5.1 |
| LDPE4 | 0.922 | 0.30 | 17,600 | 137,200 | 510,700 | 7.80 | 3,534,000 | 10.9 |
| LDPES | 0.928 | 0.90 | 16,300 | 103,500 | 370,200 | 6.33 | 1,545,900 | 7.9 |
| LDPE6 | 0.923 | 0.75 | 17,800 | 101,200 | 333,400 | 5.68 | 2,314,300 | 11.8 |
| N.D. = Not determined | | | | | | | | |

Now the processes of forming LDPE are generally described. Ethylene polymers LDPE 1, 2, 4, 5, and 6 were each produced by a high-pressure, free-radical polymerization process, according to the generalized block diagram presented in Fig. 1 and the specific details provided in Table 2 and Table 3.

In particular, LDPE 1 was produced in a tubular reactor comprising four reaction zones. Ethylene was injected in the front of the first reaction zone, and the chain transfer agent (CTA) was injected into the first reaction zone. Additional ethylene and CTA were injected in the side of the second reaction zone. LDPE 2, 4, and 6 were made in a tubular reactor comprising three reaction zones. Ethylene was injected in the front of the first reaction zone, and CTA was injected into the first reaction zone. Additional ethylene and CTA were injected in the side of the second reaction zone. LDPE 5 was produced in a reactor with a configuration comprising an autoclave with two reaction zones followed by a tubular reactor comprising two reaction zones. Ethylene and CTA were injected in the front of the first reaction zone of the autoclave portion and also in the side of the second reaction zone of the autoclave.

For LDPE 1, 2, 4, 5, and 6, CTA was introduced to control polymer molecular weight and achieve a target melt index (I2) value. A suitable CTA may comprise alkane, alkene, ketone, or aldehyde functionality, such as propylene, isobutane, n-butane, 1-butene, methyl ethyl ketone, acetone, and propionaldehyde. LDPE 1 was made with propionaldehyde and propylene. LDPE 2, 4, and 6 were made with propylene and methyl ethyl ketone. LDPE 5 was made with propylene and propionaldehyde.

Now the system of processing LDPE is described. With reference now to Fig. 1, the process reaction system 100 shown in Fig. 1 is a partially closed-loop, dual recycle, high-pressure, LDPE production system. In the process reaction system 100 a fresh ethylene feed line 101 is mixed with a high ethylene stream 161-that is an exit stream of a booster compressor 160-and an optional chain transfer agent (CTA) stream 102 to form a mixed stream (i.e., a mixed stream of fresh ethylene feed line 101, high ethylene stream 161, and optional CTA stream 102). This mixed stream is introduced into a primary compressor 110 that is sequentially connected to the booster compressor 160, which is upstream from the primary compressor 110, and is sequentially connected to a hypercompressor 120, which is downstream from the primary compressor 110. In the primary compressor 110, the mixed stream is compressed and exits the primary compressor 110 as a compressed stream 111.

The compressed stream 111 is mixed with a high pressure recycle stream 143 to form a mixed stream 112. The mixed stream 112 is optionally mixed with an optional second CTA stream 113 to form a second mixed stream 114. The second mixed stream 114 is introduced to the hypercompressor 120 that is sequentially connected to both the primary compressor 110 and a high pressure separator (HPS) 140, which are upstream of the hypercompressor 120. In the hypercompressor 120, the mixed stream is compressed and exits the hypercompressor 120 as a compressed stream 121 and a second compressed stream 122. The compressed stream 121 and the second compressed stream 122 may be split prior to compression in the hypercompressor 120 or after compression in the hypercompressor 120, and may be optionally cooled by inline coolers (not shown) prior to injection into a reactor 130.

Now the processes of forming LDPE in the reactor 130 are described. The process conditions within the reactor 130 are summarized in Table 2 and Table 3. For LDPE 1, 2, 4, 5, and 6, the compressed stream 121 comprising ethylene and CTA was the front injection to the reactor 130, which is sequentially connected to the hypercompressor 120, which is upstream of the reactor 130. In the examples, the reactor 130 may be either a tubular reactor or an autoclave reactor connected to the tubular reactor in series. Peroxide injections occur at multiple positions within the reactor 130 to initiate reaction. Prior to a first peroxide injection, the compressed stream 121 is optionally heated to a desired temperature for reaction initiation. For LDPE 1, 2, 4, and 6, the front injection of ethylene and CTA, and the first peroxide injection were injected into the tubular reactor section. For LDPE 5, the front injection of ethylene and CTA, and the first peroxide injection were injected into the autoclave reactor section.

For LDPE 1, 2, 4, 5, and 6, the second compressed stream 122 comprising ethylene and CTA was the first side injection to the reactor 130, and entered the reactor sequentially after the first peroxide injection. A second peroxide injection accompanied the second compressed stream 122. For LDPE 1, 2, 4, and 6, the first side injection of ethylene and CTA, and the second peroxide injection were injected into the tubular reactor section. For LDPE 5, the first side injection of ethylene and CTA, and the second peroxide injection were injected into the autoclave reactor section.

For LDPE 1, 2, 4, 5 and 6, a third peroxide injection was injected into the tubular reactor section.

For LDPE 1 and 5, a fourth peroxide injection was injected into the tubular reactor section.

Now the processes of forming LDPE after the reactor 130 are described. A polymerized stream 131 passes through a pressure let-down valve and an aftercooler (not shown) prior to introduction into the HPS 140 that is sequentially connected to a low pressure separator (LPS) 150. At the HPS 140, the polymerized stream 131 is separated into an ethylene rich stream 141 and a polymer rich stream 144. A purge stream 142 is taken off the ethylene rich stream 141 to prevent the build-up of low molecular weight molecules in the reaction system. The resulting high pressure recycle stream 143 is cooled and recycled back to the hypercompressor 120.

The polymer rich stream 144 is introduced to the LPS 150 that is sequentially connected to the HPS 140, which is upstream of the LPS, and is sequentially connected to the booster compressor 160, which is downstream of the LPS. At the LPS, the polymer rich stream is separated into a second polymer rich stream 152 and a second ethylene rich stream 151. The second polymer rich stream 152 exits the process system 100 where it may be pelletized or otherwise finished for end use.

The second ethylene rich stream 151 is introduced to the booster compressor 160 that is sequentially connected to the LPS, which is upstream of the booster compressor 160, and is sequentially connected to the primary compressor 110, which is downstream of the booster compressor 160. At the booster compressor 160, the second ethylene rich stream 151 is conditioned and the resulting conditions stream 161 is mixed with the optional CTA stream 102 and the fresh ethylene feed line 101.

Table 2: Peroxide composition of LDPE 1,2,4,5,6.

| Resin name | | LDPE 1 | LDPE 2 | LDPE 4 | LDPE 5 | LDPE 6 |
|---|---|---|---|---|---|---|
| Reaction zone | Initiator | Composition | | | | |
| #1 | TBPIV | 46% | | | | |
| #1 | TBPO | 46% | 100% | 100% | 100% | 100% |
| #1 | TBPA | 8% | | | | |
| #2 | TBPIV | 15% | | | 100% | |
| #2 | TBPO | 73% | 94% | 92% | | 92% |
| #2 | DTBP | 11% | 6% | 8% | | 8% |
| #3 | TBPIV | | | | 14% | |
| #3 | TBPO | 28% | | | 74% | |
| #3 | DTBP | 72% | 100% | 100% | 12% | 100% |
| #4 | TBPIV | | N/A | N/A | 14% | N/A |
| #4 | TBPO | 28% | | | 74% | |
| #4 | DTBP | 72% | | | 12% | |
| TBPIV= tert-butyl peroxypivalate; TBPA= tert-butyl peroxyacetate; TBPO= tert-butyl peroxy-2-ethylhexanoate; DTBP= di-tert-butyl peroxide. | | | | | | |

Table 3: Process conditions of LDPE 1,2,4,5,6 in the reactor 130.

| | LDPE 1 | LDPE 2 | LDPE 4 | LDPE 5 | LDPE 6 |
|---|---|---|---|---|---|
| Reactor pressure (Bar) | | | | | |
| | 2500 | 2550 | 2525 | 2440 | 2525 |
| Reactor Temperatures (°C) | | | | | |
| Autoclave top inlet | N/A | N/A | N/A | 50 | N/A |
| Autoclave top | NA | NA | N/A | 170 | N/A |
| Autoclave bottom inlet | N/A | N/A | N/A | 50 | N/A |
| Autoclave bottom | N/A | N/A | N/A | 170 | N/A |
| Zone 1 initiation | 140 | 141 | 150 | 170 | 143 |
| 1st peak | 255 | 247 | 245 | 274 | 245 |
| Zone 2 initiation | 163 | 140 | 145 | 213 | 144 |
| 2nd peak | 282 | 275 | 302 | 270 | 303 |
| Zone 3 initiation | 232 | 247 | 242 | N/A | 239 |
| 3rd peak | 283 | 284 | 303 | N/A | 309 |
| Zone 4 initiation | 237 | N/A | N/A | N/A | N/A |
| 4th peak | 281 | N/A | N/A | N/A | N/A |
| Conversion (wt.%) | | | | | |
| | 24.9 | 19.1 | 24.0 | 24.9 | 26.0 |

Now the processes of forming HDPE are described. HDPE 1-3 were made according to the following procedures: A heterogeneously branched ethylene/$\alpha$-olefin copolymer was prepared using a multi-constituent catalyst system, as described hereinabove, suitable for (co)polymerizing ethylene and one or more $\alpha$-olefin comonomers, e.g. 1-octene or 1-hexene, in an adiabatic continuously stirred tank reactor, CSTR, under a solution phase polymerization condition. More specifically for this example the reactor consisted of two adiabatic reactors linked together in series, operating under a single solution phase polymerization condition. All feed streams were introduced into the first reactor which was a mechanically agitated adiabatic CSTR. The effluent from the first reactor was fed to the second reactor which was identical to the first except that it was not mechanically agitated and the second reactor accepted no feeds other than the effluent from the first reactor.

The saturated hydrocarbon solvent, e.g. Shellsol 100-140, ethylene monomer, and 1-octene or 1-hexene comonomer reactor feed streams were purified using molecular sieves prior to introduction in the reaction environment. The solvent, ethylene monomer, and 1-octene or 1-hexene comonomer were combined into a single feed stream prior to introduction into the reaction environment and were temperature controlled. The hydrogen was also added to the combined single feed stream prior to introduction into the reaction environment.

The catalyst system was fed to the reaction environment separately from the single feed stream. The catalyst-premix (i.e., the heterogenous Ziegler-Natta type catalyst premix, prepared according to U.S. Pat. No. 4,612,300) was combined in line to the reactor with a dilute stream of tri-ethyl aluminum, TEA. The TEA flow was controlled to achieve a specified molar ratio of Al to Ti with the catalyst premix. The catalyst-premix was flow controlled to control the extent of reaction in the reaction environment. Specific targets are contained in data Table 4.

The first reactor temperature and the overall ethylene conversion were controlled by adjusting the catalyst-premix flow and the total solvent flow introduced into the reaction environment. Melt index of the overall polymer was controlled by adjusting the hydrogen feed to the reaction environment. Density of the overall polymer was controlled by adjusting the comonomer feed to the reaction environment. Values for the control parameters are contained in data Table 4.

After leaving the reaction environment, reaction was stopped by addition of and reaction of the active catalyst with a fluid specially designed for that purpose, typically water. The polymer was separated from the solvent and any unreacted monomer, comonomer(s), and hydrogen; the isolated polymer melt is then pelletized and packaged. The separated stream containing solvent, monomer, comonomer(s), and hydrogen is recycled after removal of a purge stream.

Table 4: Process conditions of HDPE 1-3.

| Reactor process parameters | Units | HDPE1 | HDPE2 | HDPE3 |
|---|---|---|---|---|
| Reactor Feed Solvent / Ethylene Mass Flow Ratio | kg/kg | 5.47 | 4.98 | 4.81 |
| Comonomer/Production mass ratio | % | 0.33 | 0.26 | 0 |
| Reactor Feed Hydrogen / Ethylene Mass Flow Ratio | % | 0.58 | 1.52 | 2.71 |
| Feed temperature | °C | 12.3 | 13.5 | 11.9 |
| First reactor temperature | °C | 194.7 | 204.7 | 207 |
| Overall ethylene conversion | % | 92.4 | 92.6 | 92.4 |
| Comonomer type | | 1-Octene | 1-Octene | N/A |
| Catalyst type | | Ziegler-Natta | Ziegler-Natta | Ziegler-Natta |

Polymer Blend Process Conditions

Polymer blends IE1-IE3 and CE3 were produced by compounding in a twin extruder. Table 5 lists polymer blend compositions, and Table 6 lists compounding conditions.

Table 5: Polymer Blend Composition

| Material | IE1 | IE2 | IE3 | CE1 | CE2 | CE3 |
|---|---|---|---|---|---|---|
| | Composition (wt. %) | | | | | |
| LDPE2 | | | | 100 | | |
| LDPE3 | | | | | 100 | |
| LDPE1 | 71 | 71 | 23 | | | 43 |

(continued)

| Material | IE1 | IE2 | IE3 | CE1 | CE2 | CE3 |
|---|---|---|---|---|---|---|
| | Composition (wt. %) | | | | | |
| LDPE4 | 24 | 24 | 27 | | | |
| LDPE5 | | | 2 | | | 52 |
| LDPE6 | | | 43 | | | |
| HDPE 1 | 5 | | 5 | | | |
| HDPE3 | | 5 | | | | |
| HDPE2 | | | | | | 5 |

Table 6: Twin screw compounding conditions of IE1-IE3, CE3.

| Sample | Unit | IE1 | IE2 | IE3 | CE3 |
|---|---|---|---|---|---|
| Barrel zone 1 | °C | 108 | 108 | 108 | 109 |
| Barrel zone 2 | °C | 150 | 151 | 150 | 150 |
| Barrel zone 3 | °C | 170 | 170 | 170 | 170 |
| Barrel zone 4 | °C | 180 | 180 | 180 | 180 |
| Barrel zone 5 | °C | 176 | 176 | 176 | 175 |
| Barrel Zone Die | °C | 175 | 175 | 175 | 175 |
| Dosing Speed | Kg/h | 5 | 5 | 5 | 5 |
| Pressure | Bar | 2 | 2 | 2 | 2 |
| RPM | RPM | 150 | 150 | 150 | 150 |
| Screw Zone 1 Temp. | °C | 149 | 149 | 149 | 149 |
| Screw Zone 2 Temp. | °C | 189 | 189 | 189 | 189 |
| Screw Zone 3 Temp. | °C | 183 | 186 | 187 | 189 |
| Torque | N/m | 59 | 60 | 63 | 56 |

Polymer Blend Properties

Polymer blend properties of inventive and comparative examples are listed in Tables 7 to 10.

Table 7: LDPE in Polymer Blend Properties

| | IE1-LDPE | IE2-LDPE | IE3-LDPE | CE1-LDPE | CE3-LDPE |
|---|---|---|---|---|---|
| I2 (dg/min) | 0.25 | 0.25 | 0.41 | 0.30 | 0.50 |
| Density (g/cc) | 0.924 | 0.924 | 0.923 | 0.926 | 0.927 |
| Melt strength (cN) | 19.7 | 19.7 | 19.2 | 21.0 | 17.8 |
| $M_n$(cc) (g/mol) | 16,700 | 16,700 | 15,000 | 18,600 | 15,600 |
| $M_w$(cc) (g/mol) | 117,400 | 117,400 | 120,700 | 100,700 | 103,600 |
| $M_w$(cc)/$M_n$(cc) | 7.01 | 7.01 | 8.04 | 5.43 | 6.63 |
| $M_z$(abs) (g/mol) | 2,366,100 | 2,366,100 | 2,156,100 | 2,333,800 | 2,540,900 |
| $M_z$(abs)/$M_w$(abs) | 11.2 | 11.2 | 9.9 | 11.7 | 13.6 |
| gpcBR | 1.58 | 1.58 | 1.66 | 1.64 | 1.48 |

Table 8: Polymer Blend Properties

| | IE1 | IE2 | IE3 | CE1 | CE2 | CE3 |
|---|---|---|---|---|---|---|
| I2 (dg/min) | 0.31 | 0.35 | 0.48 | 0.38 | 0.55 | 0.60 |
| Density (g/cc) | 0.925 | 0.925 | 0.924 | 0.928 | 0.928 | 0.928 |
| Melt strength (cN) | 18.3 | 16.4 | 20.9 | 21.0 | 27.3 | 16.7 |
| Viscosity @ 0.1 rad/s and 190 °C (Pa-s) | 31,874 | 30,098 | 23,984 | 27,590 | 21,780 | 19,590 |
| Viscosity @ 1.0 rad/s and 190 °C (Pa-s) | 12,358 | 11,764 | 9,825 | 11,782 | 9,372 | 8,804 |
| Viscosity @ 10 rad/s and 190 °C (Pa-s) | 3,668 | 3,492 | 3,044 | 3,641 | 2,976 | 2,898 |
| Viscosity @ 100 rad/s and 190 °C (Pa-s) | 905 | 863 | 780 | 919 | 775 | 772 |
| Viscosity Ratio ($\frac{V@0.1}{V@100}$) at 190 °C | 35.2 | 34.9 | 30.7 | 30.0 | 35.6 | 25.4 |
| Tan delta @ 0.1 rad/s and 190 °C | 1.73 | 1.77 | 1.91 | 2.08 | 2.03 | 2.28 |
| Tm1 (°C) | 111.2 | 111.0 | 110.2 | 112.2 | 115.5 | 113.0 |
| Tm2 (°C) | 119.6 | 120.7 | 119.6 | 119.4 | - | 119.9 |
| Tm3 (°C) | 132.0 | 124.7 | 123.3 | 122.7 | - | 123.0 |
| Heat of fusion (J/g) | 157.5 | 157.9 | 154.1 | 165.3 | 161.5 | 162.6 |
| % Crystallinity | 53.9 | 54.1 | 52.8 | 56.6 | 55.3 | 55.7 |
| Tc1 (°C) | 64.5 | 65.2 | 63.4 | 66.3 | 106.8 | 66.4 |
| Tc2 (°C) | 101.9 | 101.4 | 100.5 | 104.2 | - | 105.0 |
| Tc3 (°C) | 108.4 | 110.2 | 108.5 | 109.0 | - | 109.3 |
| $M_n$(cc) (g/mol) | 18,700 | 18,400 | 17,100 | 19,100 | 17,800 | 17,900 |
| $M_w$(cc) (g/mol) | 117,900 | 116,700 | 119,700 | 100,100 | 107,300 | 104,600 |
| $M_w$(cc)/$M_n$(cc) | 6.30 | 6.35 | 6.98 | 5.25 | 6.01 | 5.84 |
| $M_z$(abs) (g/mol) | 4,758,200 | 4,861,000 | 5,118,700 | 3,748,100 | 780,900 | 4,940,000 |
| $M_z$(abs)/$M_w$(abs) | 18.4 | 18.8 | 18.9 | 19.2 | 5.1 | 22.2 |
| gpcBR | 1.80 | 1.87 | 1.96 | 1.54 | 1.10 | 1.68 |
| Hexane extractables (wt.%) | 0.97 | 0.97 | 1.28 | 0.66 | 0.74 | 0.81 |

Table 9: Polymer Blend Properties (cont'd)

| Unsaturation by $^1$H NMR | IE1 | IE2 | IE3 | CE1 | CE2 | CE3 |
|---|---|---|---|---|---|---|
| Vinylene/1000C | 41 | 27 | 47 | N.D. | N.D. | 30 |
| Trisubstituted/1000C | 31 | 12 | 29 | N.D. | N.D. | 21 |
| Vinyl/1000C | 69 | 57 | 90 | N.D. | N.D. | 51 |
| Vinylidene/1000C | 118 | 112 | 139 | N.D. | N.D. | 109 |
| Total unsaturation/1000C | 259 | 207 | 306 | N.D. | N.D. | 211 |
| N.D. = Not determined | | | | | | |

Table 10: Polymer Blend Properties (cont'd)

| Branching by $^{13}$C NMR | IE1 | IE2 | IE3 | CE1 | CE2 | CE3 |
|---|---|---|---|---|---|---|
| 1,3-diethyls/1000C | 2.9 | 2.7 | 3.5 | N.D. | N.D. | 2.4 |
| Gem-diethyls and/or C2 on Cq /1000C | 0.99 | 0.99 | 1.4 | N.D. | N.D. | 1.0 |

(continued)

| Branching by 13C NMR | IE1 | IE2 | IE3 | CE1 | CE2 | CE3 |
|---|---|---|---|---|---|---|
| C4/1000C | 5.5 | 5.4 | 5.7 | N.D. | N.D. | 5.0 |
| C5/1000C | 1.8 | 1.9 | 1.6 | N.D. | N.D. | 1.4 |
| C6 by octene/1000C | 0.53 | 0.29 | 0.49 | N.D. | N.D. | 0.17 |
| C6+/1000C | 2.7 | 2.9 | 3.0 | N.D. | N.D. | 2.6 |
| N.D. = Not determined. | | | | | | |

Films

The three-layer films had an A/B/A structure, wherein A was the skin layer comprising DOWLEX™ 2045G, a LLDPE having a density of 0.920 g/cc and a melt index of 1, and B was the core layer comprising the inventive or comparative polymer blend composition. A 9-layer Collin Blown Film Line was used to extrude the films according to the processing parameters of Table 11.

Table 11. Film Fabrication Conditions.

| Parameters | Units | Values |
|---|---|---|
| BUR | | 2.5 |
| Corona treated | Dyne | 0 |
| Die gap | mm | 2.2 |
| Output Rate | kg/h | 10-11 |
| Take-off Speed | m/min | 2 |
| Thickness | μm | 50 |

The mechanical properties and optical properties of the inventive film examples and the comparative film examples are disclosed here. As shown in Table 5, all inventive examples (IE1-IE3) were LDPE/HDPE blends comprising 5 wt.% HDPE, while comparative examples CE1 and CE2 comprised 100 wt.% LDPE, and CE3 was an LDPE/HDPE blend comprising 5 wt.% HDPE. The properties of films comprising the polymer blends are disclosed in Table 12. The performance of each polymer blend composition was compared in the form of three-layer structured films. The mechanical and optical properties of polymer blend films are listed in Table 12.

Table 12. Property of 3-layer polymer blend films.

| | IE1 | IE2 | IE3 | CE1 | CE2 | CE3 |
|---|---|---|---|---|---|---|
| Clarity (%) | 66.9 | 69.7 | 65.4 | 73.0 | 64.3 | 65.4 |
| Internal Haze (%) | 3.3 | 3.3 | 3.1 | 3.9 | 4.4 | 4.7 |
| Total Haze (%) | 5.7 | 5.2 | 5.5 | 6.0 | 8.0 | 7.6 |
| Tear CD (g) | 388 | 381 | 422 | 548 | 605 | 606 |
| Tear MD (g) | 204 | 264 | 236 | 331 | 166 | 232 |
| 2% Secant CD (MPa) | 210 | 206 | 199 | 218 | 217 | 229 |
| 2% Secant MD (MPa) | 187 | 192 | 187 | 200 | 209 | 209 |
| Free Shrinkage CD (%) | 5.3 | 5.8 | 5 | 5.5 | 5.5 | 5.4 |
| Free Shrinkage MD (%) | 52 | 59 | 52 | 34 | 40 | 44 |

Overall, the inventive examples surprisingly showed improved internal and total haze as well as shrink % MD compared to the comparative examples (see Table 12). With the improved optical and mechanical properties, the inventive examples also showed comparable processability to the comparative examples as discussed below.

Typically, a tradeoff exists between the polyethylene's optical properties and mechanical properties. However, the inventive examples showed desirable mechanical properties. Particularly, the inventive examples showed significantly greater shrinkage in the machine direction (MD) than the comparative examples. The shrinkage in the cross direction (CD) of the inventive examples remain comparable to those of the comparative examples. Accordingly, the result suggests the inventive examples had mechanical properties comparable to or greater than 100 wt.% LDPE examples and the comparative LDPE/HDPE blend example.

As shown in Table 12, the inventive examples had improved optical quality. Particularly, the inventive examples had significantly reduced internal haze and total haze compared to the comparative examples. The inventive examples also had improved Zebedee clarity compared to CE2 and CE3.

In sum, the disclosed HDPE/LDPE blend compositions provide improved mechanical properties without sacrificing the optical properties.

It will be apparent to those skilled in the art that various modifications and variations can be made to the embodiments described herein without departing from the spirit and scope of the claimed subject matter. Thus, it is intended that the specification cover the modifications and variations of the various embodiments described herein provided such modification and variations come within the scope of the appended claims and their equivalents.

**Claims**

1. A polymer blend comprising low density polyethylene (LDPE) and less than 10 wt.% high density polyethylene (HDPE), wherein:

   the LDPE comprises a density of 0.910 to 0.925 g/cc, a melt index (I2) of 0.2 to 0.8 dg/min, and an $M_w(cc)/M_n(cc)$ from 4 to 10;
   the HDPE comprises a density of 0.940 to 0.970 g/cc, an I2 from 0.6 to 10 dg/min, and an $M_w(cc)/M_n(cc)$ from 2 to 5; and
   the polymer blend comprises a density of 0.918 to 0.926 g/cc, an I2 from 0.2 to 0.8 dg/min, and an $M_w(cc)/M_n(cc)$ from 4 to 9.

2. The polymer blend of claim 1, wherein the density of the LDPE is from 0.920 to 0.925 g/cc, the I2 of the LDPE is less than 0.5 dg/min, and the $M_w(cc)/M_n(cc)$ of the LDPE is from 6 to 9.

3. The polymer blend of claim 1 or 2, wherein the LDPE has an $M_z(abs)/M_w(abs)$ from 5 to 20, and a gpcBR greater than 0.05 as measured according to TD-GPC.

4. The polymer blend of any one of claims 1 to 3, wherein the LDPE has a melt strength of 15 to 25 cN.

5. The polymer blend of any one of claims 1 to 4, wherein the polymer blend comprises from 2 to 10 wt.% HDPE, or from 3.5 to 5 wt.% HDPE.

6. The polymer blend of any one of claims 1 to 5, wherein the polymer blend has an $M_z(abs)/M_w(abs)$ from 14 to 21, and a gpcBR greater than 0.05.

7. The polymer blend of any one of claims 1 to 6, wherein the I2 of the polymer blend is less than 0.5 dg/min.

8. The polymer blend of any one of claims 1 to 7, wherein the polymer blend has a melt strength of 15 to 20 cN.

9. A film comprising the polymer blend of any one of claims 1 to 8, wherein the film is a monolayer film or a multilayer film.

10. The film of claim 9, wherein the film is a multilayer film comprising the polymer blend in a core layer.

11. A composition comprising ethylene-based polymer, wherein the ethylene based polymer comprises a density of 0.918 to 0.926 g/cc, an I2 from 0.2 to 0.8 dg/min, and an $M_w(cc)/M_n(cc)$ from 4 to 9.

12. The composition of claim 11, wherein the ethylene-based polymer is LDPE.

FIG. 1

Europäisches Patentamt
European Patent Office
Office européen des brevets

# EUROPEAN SEARCH REPORT

Application Number

EP 23 38 3090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/019563 A1 (DOW GLOBAL TECHNOLOGIES INC [US]; KARJALA TERESA P [US] ET AL.) 17 February 2011 (2011-02-17) | 11,12 | INV. C08L23/04 B32B27/32 |
| A | * claims 1,9; examples 1-6; tables 5,8-12 * | 1-10 | C08J5/18 |
| A | CA 2 479 738 A1 (EXXONMOBIL CHEM PATENTS INC [US]) 24 March 2005 (2005-03-24) * claims 1,5,6; examples 1-9; tables 1-3 * | 1-12 | |
| A | WO 2016/025168 A1 (DOW GLOBAL TECHNOLOGIES LLC [US]; DOW QUIMICA MEXICANA S A DE C V [MX]) 18 February 2016 (2016-02-18) * paragraphs [0015] - [0034], [0071] - [0076]; examples * | 1-12 | |

TECHNICAL FIELDS SEARCHED (IPC)

C08L
B32B
C08J

The present search report has been drawn up for all claims

| Place of search | Date of completion of the search | Examiner |
|---|---|---|
| Munich | 11 April 2024 | Iraegui Retolaza, E |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

**ANNEX TO THE EUROPEAN SEARCH REPORT**

**ON EUROPEAN PATENT APPLICATION NO.**          EP 23 38 3090

This annex lists the patent family members relating to the patent documents cited in the above-mentioned European search report.
The members are as contained in the European Patent Office EDP file on
The European Patent Office is in no way liable for these particulars which are merely given for the purpose of information.

**11-04-2024**

| Patent document cited in search report | | Publication date | Patent family member(s) | | Publication date |
|---|---|---|---|---|---|
| WO 2011019563 | A1 | 17-02-2011 | BR 112012003072 | A2 | 16-08-2016 |
| | | | CA 2768705 | A1 | 17-02-2011 |
| | | | CN 102574946 | A | 11-07-2012 |
| | | | EP 2464672 | A1 | 20-06-2012 |
| | | | ES 2765649 | T3 | 10-06-2020 |
| | | | JP 5798557 | B2 | 21-10-2015 |
| | | | JP 2013501847 | A | 17-01-2013 |
| | | | KR 20120052295 | A | 23-05-2012 |
| | | | SG 178309 | A1 | 29-03-2012 |
| | | | US 2012130019 | A1 | 24-05-2012 |
| | | | WO 2011019563 | A1 | 17-02-2011 |
| CA 2479738 | A1 | 24-03-2005 | BR PI0404121 | A | 24-05-2005 |
| | | | CA 2479738 | A1 | 24-03-2005 |
| | | | CN 1608841 | A | 27-04-2005 |
| | | | MX PA04009294 | A | 05-07-2005 |
| WO 2016025168 | A1 | 18-02-2016 | AR 102904 | A1 | 05-04-2017 |
| | | | BR 112017002865 | A2 | 30-01-2018 |
| | | | CN 107073905 | A | 18-08-2017 |
| | | | EP 3180191 | A1 | 21-06-2017 |
| | | | KR 20170045239 | A | 26-04-2017 |
| | | | US 2018319142 | A1 | 08-11-2018 |
| | | | WO 2016025168 | A1 | 18-02-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4612300 A

**Non-patent literature cited in the description**

- **YAU, WALLACE W.** Examples of Using 3D-GPC—TREF for Polyolefin Characterization. *Macromol. Symp.*, 2007, vol. 257, 29-45